# EUROPEAN PATENT SPECIFICATION

(11) **EP 2 708 997 B1**
(45) Date of publication and mention of the grant of the patent: **26.04.2017**
(21) Application number: 12786748.9
(22) Date of filing: 11.05.2012
(51) Int. Cl.: G06F 3/0485

(54) **DISPLAY DEVICE, USER INTERFACE METHOD, AND PROGRAM**
ANZEIGEVORRICHTUNG, BENUTZERSCHNITTSTELLENVERFAHREN UND PROGRAMM
DISPOSITIF D'AFFICHAGE, PROCÉDÉ POUR INTERFACE UTILISATEUR ET PROGRAMME

(30) Priority: 13.05.2011 JP 2011108668
(43) Date of publication of application: 19.03.2014
(73) Proprietor: NTT DOCOMO, INC., Chiyoda-ku Tokyo (JP)
(72) Inventor: KAWANO, Natsuko, Tokyo 100-6150 (JP); HASHIDA, Naoki, Tokyo 100-6150 (JP); TSUGE, Yuki, Tokyo 100-6150 (JP); SHIMOO, Kousei, Tokyo 100-6150 (JP); TAKAYAMA, Fukiko, Tokyo 100-6150 (JP); SASAHARA, Yuko, Tokyo 100-6150 (JP); MURAKAMI, Keiichi, Tokyo 100-6150 (JP); HAMATSU, Makoto, Tokyo 100-6150 (JP)
(74) Representative: Hoffmann Eitle
(86) International application number: PCT/JP2012/062149
(87) International publication number: WO 2012/157563

(56) References cited:
- WO-A2-2009/032638
- WO-A2-2010/048448
- JP-A- 2010 503 126
- JP-A- 2011 221 827
- US-A1- 2009 183 076

## Description

### Technical Field

The present invention relates to a GUI (Graphical User Interface).

### Background Art

Techniques of displaying plural images of widgets on a desktop or background screen of electronic apparatuses are known (Patent Document 1). Here, a widget means a software program which can be executed in a display mode in which it is embedded in a screen and serves to display information such as news or weather forecast or to provide the functions of a calculator or a sticky note. In general, the display position of a widget can be changed through the user's operation and the display or non-display thereof can be also controlled.

### Prior Art Documents

### Patent Documents

Patent Document 1: Japanese Patent Application Laid-Open No. 2011-070582

Further, according to US 2009/0183076 A1, a method of providing a graphical user interface (GUI) and a multimedia apparatus using the same are provided, the method including: dividing a list display area into a plurality of sub-areas; and displaying a plurality of related lists regarding the multimedia content on the plurality of sub-areas, respectively.
Document WO 2010/048448 A2 relates to contextual search by a mobile communications device. A search query is received and a context is detected of a user interface currently being displayed on a display device of a mobile communications device.

Document WO 2009/032638 A2 discloses methods, systems, and apparatus, including computer program products, for presenting user interface elements. A first page of one or more user interface elements is presented on a touch-sensitive display. Each of the user interface elements corresponds to a respective application. A gesture performed on the touch-sensitive display is detected. In response to the detected gesture, a second page of one or more user interface elements is presented on the touch sensitive display.

### Summary of the Invention

### Problems to be solved by the Invention

There are various types of information to be displayed on an electronic apparatus. Arrangement of some information can be relatively freely changed by a user and some information cannot be changed by a user. When such information is displayed in the same display type, the usability to a user may be damaged.

Therefore, an object of the invention is to provide a user interface which is convenient for a user by performing a scrolling operation in a mode corresponding to images or information displayed on a screen.

### Means for Solving the Problems

The problem of the invention is solved by the subject matter of the independent claims. Advantageous embodiments are described in the dependent claims.

### Advantageous Effect of the Invention

According to the invention, it is possible to provide a user interface which is convenient for a user by performing a scrolling operation in a mode corresponding to images or information displayed on a screen.

### Brief Description of the Drawings

Fig. 1 is a diagram illustrating the external configuration of a display device.
Fig. 2 is a block diagram illustrating the hardware configuration of the display device.
Fig. 3 is a screen transition diagram illustrating screens displayed by a display.
Fig. 4 is a functional block diagram illustrating the functional configuration of a control unit.
Fig. 5 is a flowchart illustrating a display control process performed by the display device.
Fig. 6 is a screen transition diagram illustrating screens displayed by the display.
Fig. 7 is a screen transition diagram illustrating screens displayed by the display.

### Description of Reference Numerals

- 100:: display device
- 101:: screen
- 110:: control unit
- 111:: information acquiring unit
- 112:: operation determining unit
- 113:: display controller
- 120:: storage unit
- 130:: touch screen
- 131:: display
- 132:: sensor unit
- 140:: communication unit

### Mode for carrying out the Invention

### First Embodiment

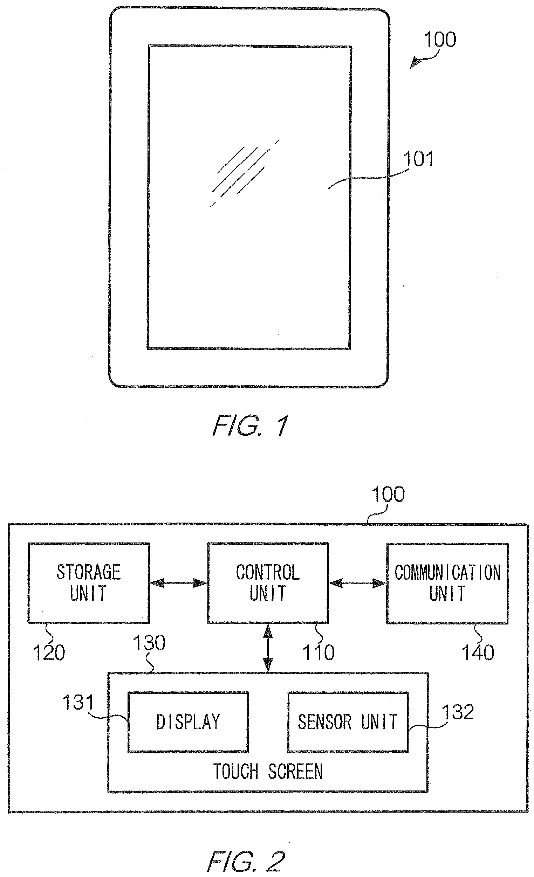

Fig. 1 is a diagram illustrating the external configuration of a display device 100 according to an embodiment of the invention. The display device 100 is an electronic apparatus having a screen 101. The screen 101 is a surface for displaying an image and is a surface for receiving an operation of a user's finger. The screen 101 has a vertically-long rectangular shape herein. That is, the screen 101 has a shape which is long in the upward and downward direction (the vertical direction) and which is short in the right and left direction (the horizontal direction). The screen 101 may allow an image to be perceived stereoscopically through glasses-free stereoscopy or the like.

The display device 100 has a size such that a user can operate the screen 141 with a finger and examples thereof include a mobile phone (including a smart phone), a tablet PC (Personal Computer), a slate PC, a PDA (Personal Digital Assistant). The display device 100 may have a size such that a user can operate the display device with the display device held in a hand, or may be operated with the display device placed on a desk or with the display device mounted on a holder. The display device 100 may not necessarily have a flat panel shape.

Fig. 2 is a block diagram illustrating the hardware configuration of the display device 100. The display device 100 includes at least a control unit 110, a storage unit 120, a touch screen 130, and a communication unit 140. The display device 100 may further include a speaker or a microphone (or input and output units thereof), a camera (including a video camera), and a vibrator, in addition to the configuration shown in Fig. 2.

The control unit 110 is means for controlling operations of the units of the display device 100. The control unit 110 includes an operation processing unit such as a CPU (Central Processing Unit) and a memory such as a ROM (Read Only Memory) and a RAM (Random Access Memory), and realizes a GUI according to the invention by executing programs stored in the ROM or the storage unit 120. The control unit 110 can realize the functions corresponding to plural applications by executing plural application software programs (hereinafter, simply referred to as "applications"). The control unit 110 may be a multi-tasking system that can simultaneously perform plural tasks (processes) or may perform a multi-tasking process through the use of a multi-core configuration.

The storage unit 120 is means for storing data. The storage unit 120 includes a recording medium such as a hard disk and a flash memory and stores data used by the control unit 110. The storage unit 120 may include a so-called removable disk, that is, a detachable recording medium. The storage unit 120 can store programs executed by the control unit 110 or image data displayed on the screen 101. The storage unit 120 may store identification information for identifying users, when a single user uses plural display devices 100 or plural users use a single display device 100.

The touch screen 130 is means for displaying an image and means for receiving a user's operation. More specifically, the touch screen 130 includes a display 131 displaying an image on the screen 101 and a sensor unit 132 receiving a user's operation on the screen 101.

The display 131 includes a display panel displaying an image through the use of a liquid crystal device or an EL (Electroluminescence) device and a drive circuit driving the display panel, and displays an image corresponding to display data supplied from the control unit 110 on the screen 101. The sensor unit 132 includes a sensor detecting a finger's touch with the screen 101 and supplies operation information indicating the position (hereinafter, referred to as a "touch point") from which the finger's touch is detected to the control unit 110. The sensor unit 132 may be able to simultaneously detect plural touch points corresponding to a so-called multi touch.

The communication unit 140 is means for transmitting and receiving data. The communication unit 140 may be a network interface accessing a network such as a mobile communication network or the Internet, or may access another electronic apparatus without using a network such as wireless communication using NFC (Near Field Communication). The communication unit 140 may be used to transmit and receive information having a monetary value, such as electronic money or electronic tickets (electronic coupons).

The hardware configuration of the display device 100 is as described above. The display device 100 executes various applications under this configuration. For example, the applications executed by the display device 100 may include applications corresponding to a so-called mailer or a web browser, in addition to notification of news or weather forecast, reproduction of images (still images or moving images) or music, playing of games, reading of electronic books, and the like. Such applications include applications which can be simultaneously executed along with other applications or applications which can be executed in the background. Such applications may be installed in the display device 100 in advance, or may be purchased by a user from providers such as content providers and may be acquired through the use of the communication unit 140.

The software programs in this embodiment include widgets. Here, a widget may be equivalent to an application or may be a software program corresponding to a partial function of an application, such as a so-called applet. For example, the widget in this embodiment may form a part of an application acquiring data of daily weather forecast or weekly weather forecast of local areas and providing information thereof and may correspond to a software program configured to provide only restrictive information such as weather or temperature of a day in a specific area (for example, an area previously set by a user). In this example, an application is a software program for providing a specific function and a widget is a software program for providing a part of the specific function. Hereinafter, an application having such correspondence with a widget is particularly referred to as a "parent application". A widget may be a part of a program constituting a parent application or may be a program independent of the program constituting the parent application.

The display device 100 switches and displays plural screens. The plural screens include a screen provided to display a widget image indicating a widget. A display area defined to display a widget image is referred to as a "customized area" in the below description. A customized area is a display area in which the display position of a widget image can be changed through a user's operation. A customized area is an area having a size corresponding to plural screens. The size of a widget image is smaller than the size of the screen 101.

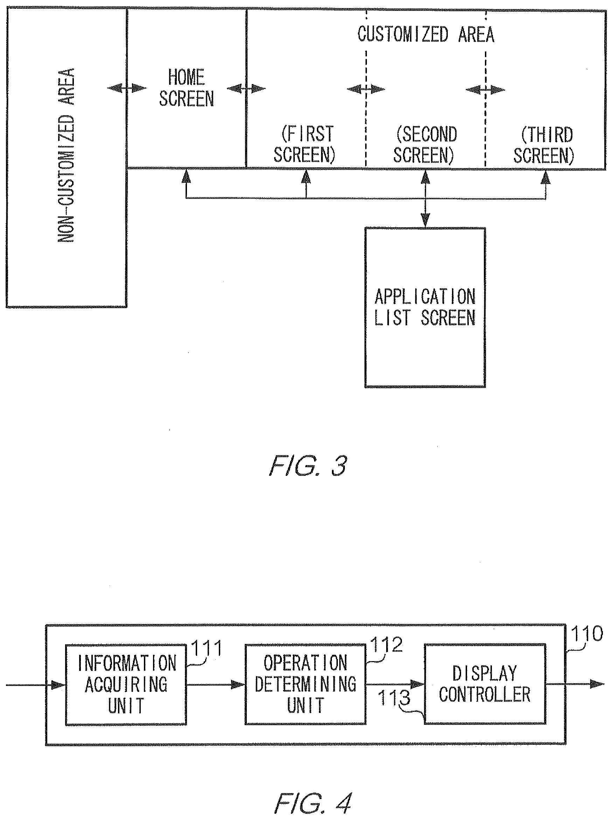

Fig. 3 is a screen transition diagram illustrating screens displayed by the display 131. As shown in the drawing, the screens displayed by the display 131 include a home screen, a customized area, a non-customized area, and an application list screen. Among these, the home screen corresponds to an example of the initial screen in the invention and the application list screen corresponds to the first list area in the invention.

The home screen is a screen serving as a reference of screen transition shown in Fig. 3. The home screen is, for example, a screen which is first displayed on the screen 101 when the display device 100 is turned on or a so-called screen lock is released. Here, the screen lock is a function of the touch screen 130 restricting the display of an image or a user's operation when a user does not operate the display device for a predetermined time or more. The size of the home screen is equal to the size of the screen 101.

A customized area is a display area in which a widget image can be displayed as described above. In the example shown in Fig. 3, the customized area has a size corresponding to three screens of the screen 101, that is, a size corresponding to three times the screen 101 in the horizontal direction. In the below description, these three screens are also referred to as "a first screen", "a second screen", and ``a third screen" sequentially from the left screen.

A non-customized area is a display area in which a predetermined type of information is displayed. Examples of information displayed in the non-customized area include a user's profile (name, phone number, and the like), web sites frequently accessed, and information (advertisements, various notifications, and the like) provided from a provider (so-called carrier) of a mobile communication network. That is, the information displayed in the non-customized area may be information stored in advance in the storage unit 120 or may be information acquired through the use of the communication unit 140 from the outside.

Information displayed in the non-customized area includes characters or images and is basically written horizontally. This information is divided into several display items, each display item is distinguished by a frame or a section line, and these display items are displayed in a state where they are arranged vertically. The size of the non-customized area is equal to the size of the screen 101 in the horizontal direction, but varies depending on the amount of information to be displayed in the vertical direction. Here, it is assumed that the size of the non-customized area in the vertical direction is larger than that of the screen 101.

The non-customized area is a display area defined so as to display information but not to receive an operation for changing the information displayed in the area. This does not mean that the information displayed in the non-customized area is unchangeable. The details or arrangement of the information displayed in the non-customized area cannot be changed through the operation on the non-customized area like a widget image. Therefore, the display device 100 may separately provide a screen for changing a user's profile or may update information when new information is received from a mobile communication network provider.

In this embodiment, the home screen, the customized area, and the non-customized area are arranged such that the customized area is adjacent to the right side of the home screen and the non-customized area is adjacent to the left side of the home screen. Here, the term "adjacent" means a state where display control is performed so that a user recognizes as if the screens were adjacent to each other, but does not mean that data in which the screens are actually adjacent to each other exists.

An application list screen is a display area in which images corresponding to software programs (applications or widgets) which can be executed by the display device 100 are displayed. The images displayed in the application list screen are, for example, icon images indicating software programs which can be executed by the display device 100, but may be character strings (names or the like) indicating the software programs. These images may be determined in advance for each software program or may be changed by a user. The size of the application list screen is equal to the size of the screen 101 herein, but may be a size (that is, a size larger than one screen size) scrollable in the vertical direction or in the horizontal direction.

The home screen may be a screen in which widget images can be displayed. That is, the home screen may be a part of the customized area. In this embodiment, a screen corresponding to a part adjacent to the non-customized area in the customized area corresponding to four screens is referred to as a "home screen".

Fig. 4 is a functional block diagram illustrating the screen transition particularly shown in Fig. 3 in the functional configuration of the control unit 110. The control unit 110 embodies the functions corresponding to the information acquiring unit 111, the operation determining unit 112, and the display controller 113 shown in the drawing by executing a predetermined program. Such functions may be embodied by cooperation of plural programs. For example, the information acquiring unit 111 or the operation determining unit 112 may be embodied by a system software program such as an OS (Operating System), instead of a software program for embodying the display controller 113.

The information acquiring unit 111 is means for acquiring operation information and information (hereinafter, referred to as "screen information") representing a screen displayed on the screen 101 at that time. More specifically, the information acquiring unit 111 acquires the operation information from the sensor unit 132 of the touch screen 130. Here, it is assumed that the operation information represents positions of one or more touch points on the screen 101 through the use of a two-dimensional orthogonal coordinate system using a predetermined position (for example, the center or any of four corners) of the screen 101 as an origin. The operation information varies time to time when a user touches the screen 101 while moving the touch point.

The operation determining unit 112 is means for determining a user's operation on the basis of the operation information and the screen information acquired by the information acquiring unit 111. In this embodiment, the operation determining unit 112 determines plural types of operations such as a "tap operation", a "flick operation", a "drag operation", and a "drag-and-drop operation" and determines the operation intended at that time by the user by determining on what screen (or what image) these operations are performed.

The tap operation is an operation of touching a point of the screen 101 and rapidly releasing the touch without moving the touch point and is used to select a specific image or the like. The flick operation is an operation of rapidly moving a touch point in any direction from the state where the screen 101 is touched and releasing the touch and is used to scroll a screen or the like. The drag operation is an operation of moving a touch point in a state where the screen 101 is touched. On the other hand, the drag-and-drop operation is an operation until a finger is detached from the screen 101 after the drag operation. The drag operation is used to scroll a screen or the like, similarly to the flick operation. The drag-and-drop operation is used to move a display position of an image or the like.

The display controller 113 is means for controlling an image to be displayed on the display 131 and means for controlling the screen transition of the screen 101. The display controller 113 controls the display 131 to display a screen corresponding to the operation on the screen 101 on the basis of the operation determined by the operation determining unit 112.

With the above-mentioned configuration, the display device 100 performs a display control process of arranging a widget image at a position, which is based on a user's operation, in the customized area or transitioning a screen in response to a user's operation. The display control process performed by the display device 100 is specifically as follows.

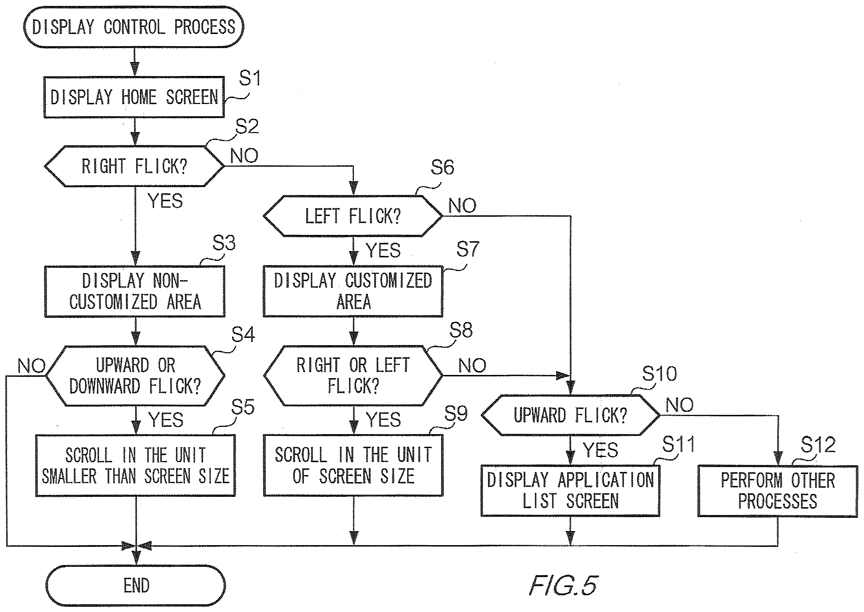

Fig. 5 is a flowchart illustrating the display control process performed by the control unit 110 of the display device 100. The display control process shown in the drawing is merely a characterized part of the invention out of the entire process performed in the display control by the control unit 110. The display device 100 can actually receive various other operations and perform processes corresponding to the received operations, in addition to the operation described below.

In the display control process, the control unit 110 displays the home screen on the screen 101 (step S1). In this state, the control unit 110 receives an operation of scrolling the home screen out of the screen 101 and scrolling one of the customized area, the non-customized area, and the application list screen into the screen 101 instead. Accordingly, the control unit 110 determines what screen the user's operation is an operation of displaying.

The operation of displaying the customized area is an operation of a feeling of moving the home screen to the left side from the present display position. In this embodiment, the operation of scrolling the screen from the home screen to the customized area is a flick operation of moving a finger to the left side. On the other hand, the operation of displaying the non-customized area is an operation in the direction opposite to the scrolling operation of displaying the customized area. In this embodiment, the operation of scrolling the screen from the home screen to the non-customized area is a flick operation of moving a finger to the right side. The operation of displaying the application list screen is an operation of a feeling of moving the home screen to the upside from the present display position and is a flick operation of moving a finger to the upside in this embodiment.

In the below description, the flick operation of moving a finger to the left side is also referred to as a "left flick" for the purpose of convenience in description. Similarly, the flick operation of moving a finger to the right side is also referred to as a "right flick", the flick operation of moving a finger to the upside is also referred to as an "upward flick", and the flick operation of moving a finger to the downside is also referred to as a "downward flick". These flick operations are not particularly limited as long as they can be determined as any of upward, downward, left, and right, and do not have to be operations directed to the just upside or the just downside with respect to the screen 101.

The control unit 110 determines which of the flick operations is received in the home screen. Specifically, the control unit 110 determines whether the right flick is received in step S2, and determines whether the left flick is received in step S6 when the determination result is negative (NO). The control unit 110 determines whether the upward flick is received in step S10 when both determination results in steps S2 and S6 are negative.

When the determination result in step S2 is affirmative (YES), that is, when the right flick is received, the control unit 110 scrolls and displays the non-customized area in the screen 101 (step S3). As described above, since the size of the non-customized area in the vertical direction in this example is larger than that of the screen 101, the non-customized area can be scrolled in the vertical direction in a state where it is displayed on the screen 101. Accordingly, the control unit 110 determines whether the upward flick or the downward flick is received in the state where the non-customized area is displayed (step S4). The upward flick or the downward flick in the state where the non-customized area is displayed corresponds to a scrolling operation of scrolling the non-customized area.

When the upward flick or the downward flick is received in the state where the non-customized area is displayed, the control unit 110 scrolls the non-customized area to the upside or the downside (step S5). Herein, the control unit 110 scrolls the non-customized area in the unit of scrolling smaller than the size of the screen 101 in the vertical direction. For example, the control unit 110 scrolls the screen using a predetermined number of pixels of the screen 101 or the height (or display items) of characters displayed in the non-customized area as the unit of scrolling.

When the upper end of the non-customized area is displayed, the control unit 110 performs a control operation so as not to move the non-customized area to the downside any more. Similarly, when the lower end of the non-customized area is displayed, the control unit 110 performs a control operation so as not to move the non-customized area to the upside any more.

When an operation other than the upward flick and the downward flick is received in the state where the non-customized area is displayed, the control unit 110 does not scroll the screen depending on the operation, but ignores the operation. That is, in this case, the control unit 110 skips the process of step S5.

On the other hand, when the determination result in step S2 is negative and the determination result in step S6 is affirmative, that is, when the left flick is received, the control unit 110 scrolls and displays the customized area in the screen 101 (step S7). As described above, since the customized area in this example has a size which is three times the size of the screen 101 in the horizontal direction, the customized area can be scrolled in the horizontal direction in the state where it is displayed on the screen 101. Accordingly, the control unit 110 determines whether the right flick or the left flick is received (step S8) in the state where the customized area is displayed. The right flick or the left flick in the state where the customized area is displayed corresponds to the scrolling operation of scrolling the customized area.

When the right flick or the left flick is received in the state where the customized area is displayed, the control unit 110 scrolls the customized area in the horizontal direction (step S9). Here, the control unit 110 scrolls the customized area using the size of the screen 101 as the unit of scrolling (that is, in the unit of screen). For example, when the left flick is received in the state where the first screen is displayed, the control unit 110 displays the second screen. That is, the control unit 110 does not end the scrolling in a halfway state such as simultaneously displaying the right half of the first screen and the left half of the second screen on the screen 101.

When the right end (the third screen) of the customized area is displayed, the control unit 110 performs a control operation so as not to move the customized area to the left side any more. On the other hand, when the right flick is received in the state where the left end (the first screen) of the customized area is displayed, the control unit 110 displays the home screen.

When both determination results in steps S2 and S6 are negative and the determination result in step S10 is affirmative, that is, when the upward flick is received, the control unit 110 scrolls and displays the application list screen in the screen 101 (step S11). In addition, when the upward flick is received in the state where the customized area is displayed, that is, when the determination result in step S8 is negative and the determination result in step S10 is affirmative, the control unit 110 scrolls and displays the application list screen in the screen 101.

When the determination result in step S10 is negative, the control unit 110 performs other processes (step S12). Here, "other processes" may be a process of maintaining the display state of the screen without changing the display state or a process of moving the display position of a widget image in the customized area. The operation of moving a widget image is, for example, a drag-and-drop operation on the widget image to be moved. This operation may be performed over plural screens in the customized area, such as an operation of moving the widget image from the first screen to the third screen.

When the screen is transitioned from the application list screen to the customized area (or the home screen), the control unit 110 may perform the following display control. The application list screen is the same screen even when the screen is transitioned from any (or the home screen) of the first to third screens thereto, but there are plural choices when the screen is transitioned from the application list screen to the customized area (or the home screen). Therefore, when the screen is first scrolled from the customized area to the application list screen and then the scrolling operation is performed to display the customized area again, the control unit 110 may always transition the screen to a predetermined screen in the customized area or may set the screen in the customized area to be displayed to the screen displayed before performing the scrolling operation of displaying the application list screen. Alternatively, when the downward flick is received in the state where the application list screen is displayed and the customized area is displayed before performing the scrolling operation of displaying the application list screen, the control unit 110 may always return the display of the screen 101 to the home screen.

Alternatively, the control unit 110 may distinguish the flick operation in the vertical direction and the flick operation in the oblique direction and may display a screen corresponding to the operations in the customized area. For example, the control unit 110 displays the second screen in the customized area when the downward flick is received in the state where the application list screen is displayed, displays the first screen when the flick operation in the lower-right direction is received in the state where the application list screen is displayed, and displays the third screen when the flick operation in the upper-left direction in the state where the application list screen is displayed. By employing this configuration, a desired screen out of the first to third screens can be displayed by an intuitive operation such as pulling the screen.

The control unit 110 may perform the following display control operation when the application list screen is displayed on the screen 101. For example, when an operation of selecting any of icon images displayed in the application list screen is received in the state where the application list screen is displayed, the control unit 110 may start up a software program corresponding to the selected icon image. In this case, the control unit 110 may display a screen corresponding to the software program on the screen 101 or may execute the software program in the background. Here, the operation of selecting a specific icon image is a tap operation or a double tap operation (an operation of repeating the tap operation twice) on the icon image and corresponds to the starting operation in the invention.

When the screen is scrolled from the application list screen to the customized area after the starting operation is received, the control unit 110 may display a screen in which a widget image corresponding to the software program started through the starting operation is disposed in the customized area. By employing this configuration, when a user starts a desired software program, a screen not associated with the software program cannot be displayed.

In this way, in the display device 100 according to this embodiment, it is possible to change the type of scrolling a screen between the customized area and the non-customized area. Accordingly, a user can perform a scrolling operation suitable for the images or information displayed in the areas. For example, even when the customized area may be scrolled in the unit of pixels or the non-customized area may be scrolled in the unit of screen, it can be said that the possibility of improving the writing of a user is low and the possibility of degrading the writing of a user is high.

In the display device 100, it can be expected to cause a user to easily recognize the difference between two areas having different features by changing the type of scrolling a screen between the customized area and the non-customized area. For example, when the direction of scroll or the unit of scrolling varies, a user can recognize that the screens are different. That is, even when the customized area and the non-customized area are transitioned from the same home screen, a user can easily recognize the difference between the customized area and the non-customized area.

By changing the scrolling types of the screens to which the same screen can be transitioned, a change can be given to a user's operation and it can thus be expected to give a fun to the user. For example, a user of a portable device such as a smart phone may repeatedly perform an operation having not particular meaning for the purpose of passing the time. When the screens are scrolled as in this embodiment, the operations are not constant but various, compared with the case where the scrolling operation in the same direction is repeated, and it is thus possible to make the operations not monotonous.

### Second Embodiment

This embodiment is similar to the first embodiment, in the hardware configuration of the display device, but is different from the first embodiment, in the screens to be displayed or the display control process thereof. Since the configuration of the display device according to this embodiment is the same as the configuration of the display device 100 according to the first embodiment, the same reference numerals as in the first embodiment will be used to describe the configuration and detailed description thereof will not be repeated.

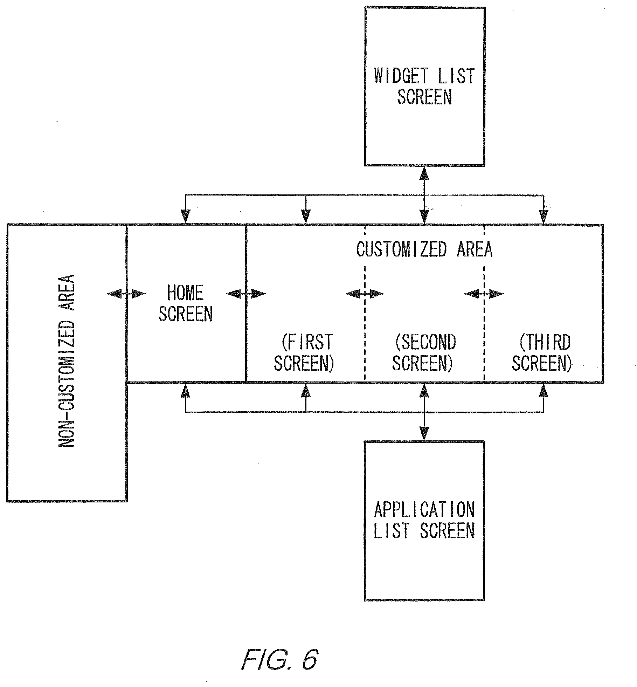

Fig. 6 is a screen transition diagram illustrating screens displayed in this embodiment. The screens to be displayed in this embodiment are different from those in the first embodiment (see Fig. 3), in that they include a widget list screen. The widget list screen is a screen for displaying a list of widgets (software programs) of which the widget images are displayed in the customized area. A user can confirm a widget under execution by merely watching a screen with reference to the widget list screen. The widget list screen may express the widgets by the use of character strings (names or the like) or by the use of icon images. The widget list screen corresponds to the second list area in the invention.

The widget list screen is recognized by a user as if it were located in the area above the customized area. On the other hand, the application list screen is recognized by a user as if it were located in the area below the customized area. Therefore, the operation of displaying the widget list area from the customized area is an operation of pulling down the screen of the customized area, that is, the downward flick. That is, the operation of displaying the widget list screen from the customized area is an operation in the direction opposite to the operation (the upward flick) of displaying the application list screen from the customized area.

The operation of displaying the customized area again in the state where the widget list screen is displayed may be the same as the operation of displaying the customized area again in the state where the application list screen is displayed, except that the direction of the flick operation is reversed. The operation of displaying the customized area again in the state where the application list screen is displayed is the same as described in the first embodiment.

### Modification Examples

The invention is not limited to the above-mentioned embodiments, but may be embodied in other aspects. For example, the invention can be embodied in the aspects described in the following modification examples. The invention may be embodied by combination of these modification examples.
(1) The positional relationship between the customized area and the non-customized area is not limited to those described in the above-mentioned embodiments. The positional relationship between the customized area and the non-customized area can be set, for example, as described below. The screen 101 may be horizontally long instead of being vertically long.

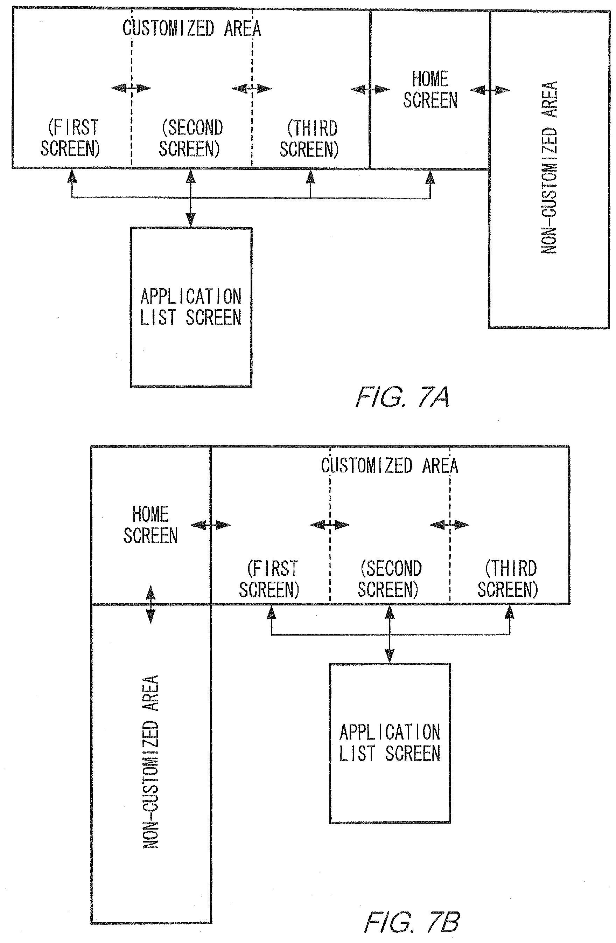

   Fig. 7 is a diagram illustrating another example of the screen transition in the display device 100. Fig. 7(a) illustrates an example where the customized area is located on the left side of the home screen and the non-customized area is located on the right side of the home screen, which is horizontally opposite to the positional relationship shown in Fig. 3. Fig. 7(b) illustrates an example where the non-customized area is arranged in the vertical direction (the downside in the drawing) of the home screen instead of the horizontal direction of the home screen. In the example shown in Fig. 7(b), the operation of scrolling the screen from the home screen to the non-customized area is the upward flick.
   The application list screen and the widget list screen may be exchanged in the positional relationship. That is, the application list screen may be displayed to be located in the upside of the home screen by scrolling and the widget list screen may be displayed to be located on the downside of the home screen by scrolling. The application list screen and the widget list screen may not be necessarily screens to which the home screen is transitioned by scrolling, but may be, for example, screens to which the screen is transitioned by tapping a predetermined icon image displayed in the home screen.
(2) The software programs in the invention may have attributes enabling to classify the software programs. Examples of the attributes of the software programs include "news", "business", "game, "entertainment", and "communication". The attributes of the software programs may be described and defined in advance in the software programs, or may be defined by a user. The attributes of the software programs may express classifications into "frequently-used software" and "less frequently-used software" on the basis of the frequencies of use of the software programs.
   In this case, attributes corresponding to the attributes of the software programs may be given to the screens of the customized area. The attributes of the screens of the customized area may be the same as the attributes of the software programs, but do not have to be the same completely as long as they have constant correspondence. For example, when a software program has an attribute of ``electronic mail" or "SNS (Social Network Service)", an attribute of "communication" may be given as the attribute including the attributes to the screen of the customized area.
   In this way, when the software programs and the screens of the customized area have attributes, the control unit 110 may control a screen for displaying widget images to be set to a screen having an attribute corresponding to the attribute of the software program corresponding to the widget image. By employing this configuration, the widget images having a common attribute can be displayed in the same screen of the customized area.
(3) The size (that is, the number of screens) of the customized area in the invention may be increased or decreased by a user's operation. In the following description, the operation of enlarging the size of the customized area is referred to as an "enlarging operation". For example, when the number of widget images displayed in the customized area reaches the upper limit and the operation of displaying a new widget image is received as the enlarging operation, the control unit 110 may enlarge the size of the customized area to provide a new screen. In this case, the size of the customized area is enlarged to be longer in the horizontal direction, but the size in the vertical direction is not changed.
   The enlarging operation may be performed in another aspect. For example, when the touch screen 130 corresponds to a multi-touch, the enlarging operation may be to perform a pinch-out operation in the horizontal direction in the customized area. Here, the pinch-out operation is an operation of moving at least one touch point so as to increase the distance between two touch points (for example, the touch point of a thumb with the screen 101 and the touch point of an index finger with the screen 101). When the number of screens in the customized area is reduced, a pinch-in operation may be performed in the horizontal direction in the customized area, similarly. Here, the pinch-in operation means an operation opposite to the pinch-out operation and is an operation of moving at least one touch point so as to decrease the distance between two touch points.
(4) A so-called physical key (hardware key) in addition to the above-mentioned sensor unit 132 may be used as the input unit in the invention. For example, the above-mentioned starting operation or enlarging operation may be realized through the operation on the physical key.
(5) In the invention, a user may use an indicating mechanism (hereinafter, referred to as an `'indicator") which is moved with the indicator held in a user's hand (or with the indicator mounted in the user's hand) such as a stylus to perform the operation, in addition to its own finger. When such an indicator is used, the input unit may detect the position of the indicator through the use of infrared rays or ultrasonic waves. When an indicator having a magnetic substance at the tip thereof is used, the position of the indicator can be detected magnetically. That is, the display device according to the invention may not include a touch screen.
   A user's operation may not be necessarily an operation of touching a screen. For example, when the touch screen 130 of the display device 100 is constructed in a capacitance type, the position of a user's finger can be detected even in a state where the user's finger is close to the screen 101 before touching the screen.
(6) The invention can be applied to various electronic apparatuses displaying plural screens, such as a game machine, a music player, and an electronic book. The invention may be embodied by cooperation of a display device including at least a display and another device (device for controlling the display of the display device) disposed independently of the display device, instead of a display device alone. In this case, the other device is not particularly limited as long as it has the functional configuration shown in Fig. 4, and may not include the display or the sensor unit. In this case, the invention can be embodied in the form of a program realizing the functional configuration shown in Fig. 4 or a recording medium having the program recorded thereon. These programs may be downloaded through a network from a server and may be installed in an electronic apparatus.

## Claims

1. A display device (100) comprising: a display that has a screen (101) displaying an image thereon, the screen having a vertical and a horizontal size; a display controller (110) that is adapted to control the display (131) to display on the screen (101) either of one of a plurality of screens including an initial screen, a customized area and a non customized area, wherein the initial screen has the same horizontal and vertical dimension as the screen (101), the customized area is a display area in which the display position of an image can be changed through a user's operation, the customized area having a size in the horizontal direction corresponding to a multiple of the horizontal dimension of the screen (101) and a size in the vertical direction equal to the vertical dimension of the screen (101), the customised area being scrollable in the horizontal direction and being adjacent to the left or right side of the initial screen; wherein the non customized area is a display area in which a predetermined type of information is displayed, the non customised area having the same horizontal dimension as the screen (101) and is scrollable in the vertical direction and is positioned adjacent to the initial screen at a position other than the position of the customized area, the display device (100) further comprising an input unit (130) that is adapted to receive the user's operation, wherein the display controller (110) is adapted to display in the customized area one or more images corresponding to one or more software programs at positions corresponding to said operation received by the input unit (130) and is adapted to display a predetermined type of information at a predetermined position in the non-customized area, the display controller being adapted to (110) horizontally scroll the customized area using the horizontal size of the screen (101) as the unit of scrolling when a horizontal scrolling operation of scrolling the customized area is received from the user by the input unit (130) and is adapted to vertically scroll the non-customized area in a unit of scrolling smaller than the vertical size of the screen (101) when a vertical scrolling operation of scrolling the non-customized area is received from the user by the input unit (130).

2. The display device (100) according to claim 1, wherein the display controller (110) displays a first list area, in which a list of one or more executable software programs is displayed, on the screen (101) instead of the customized area when an upward or downward scrolling operation on the customized area is received from the user by the input unit (130), and displays the customized area on the screen (101) instead of the first list area when an upward or downward scrolling operation on the first list area is received from the user by the input unit (130).

3. The display device (100) according to claim 2, wherein the display controller (110) controls the display (131) to display on the screen (101) the part of the customized area which has been displayed on the screen (101) before a display of the screen was changed to the first list area, when the display of the screen is changed from the customized area to the first list area and is then changed to the customized area again.

4. The display device (100) according to claim 2, wherein the input unit (130) receives from the user a starting operation of starting any of the one or more software programs in a state where the first list area is displayed on the screen (101), and
wherein the display controller (110) displays a part in which an image corresponding to the software program started through the starting operation is disposed in the customized area on the screen (101) when the display of the screen is changed from the first list area to the customized area after the starting operation.

5. The display device (100) according to claim 2, wherein the display controller (110) displays on the screen (101) a second list area, in which a list of the one or more software programs corresponding to one or more images displayed in the customized area is displayed, the second list area being displayed when a scrolling operation in a direction other than that for displaying the first list area is received as the upward or downward scrolling operation from the user by the input unit (130) in a state where the customized area is displayed on the screen (101).

6. The display device (100) according to any one of claims 2 to 5, wherein the one or more software programs have predetermined attributes, respectively,
wherein the customized area has a size corresponding to plural screens in the horizontal direction and has attributes determined for the screens, and
wherein the display controller (110) displays images corresponding to the software programs in the screens of the customized area, the screens having attributes corresponding to the attributes of the software programs.

7. The display device (100) according to any one of claims 1 to 6, , wherein the input unit (130) receives from the user an enlarging operation for enlarging the size of the customized area, and
wherein the display controller (110) enlarges, using the horizontal size of the screen (101) as the unit of enlarging, the customized area to be longer in the horizontal direction than that before performing the enlarging operation when the enlarging operation is received by the input unit (130).

8. A method of interacting with a user interface for a display device (100) having a display (131) that has a screen (101) displaying an image thereon, the screen having a vertical and a horizontal size, and an input unit (130) that receives a user's operation, comprising: a first step of displaying an initial screen on the screen (101), wherein the initial screen has the same horizontal and vertical dimension as the screen (101); a second step of displaying one or more images corresponding to one or more software programs at positions corresponding to the user's operation on the basis of the operation received by the input unit (130) in a state where the initial screen is displayed on the screen (101), and displaying any of a customized area, which is a display area in which the display position of an image can be changed through the user's operation, and a non-customized area, which is a display area in which a predetermined type of information is displayed, wherein the customized area has a size in the horizontal direction corresponding to a multiple of the horizontal dimension of the screen (101) and a size in the vertical direction equal to the vertical dimension of the screen (101), the customized area being scrollable in the horizontal direction and is positioned adjacent to the left or right side of the initial screen; and wherein the non-customized area has the same horizontal dimension as the screen (101) and is scrollable in the vertical direction and is positioned adjacent to the initial screen at a position other than the position of the customized area, the method further comprising: a third step of horizontally scrolling the customized area using the horizontal size of the screen (101) as the unit of scrolling when a scrolling operation of scrolling the customized area is received from the user by the input unit (130), and vertically scrolling the non-customized area in the unit of scrolling smaller than the vertical size of the screen (101) when a vertical scrolling operation of scrolling the non-customized area is received from the user by the input unit (130).

9. A computer program product comprising instructions adapted to execute each of the steps of method claim 8.

## Patentansprüche

1. Anzeigevorrichtung (100), umfassend: eine Anzeige, die einen Bildschirm (101) hat, der darauf ein Bild anzeigt, wobei der Bildschirm eine vertikale und eine horizontale Größe hat; eine Anzeigesteuerung (110), die dazu angepasst ist, die Anzeige (131) zum Anzeigen, auf dem Bildschirm (101), eines von einem von einer Mehrzahl von Bildschirmen inklusive einem Anfangsbildschirm, einem angepassten Bereich und einem nicht-angepassten Bereich anzusteuern, wobei der Anfangsbildschirm die gleiche horizontale und vertikale Dimension wie der Bildschirm (101) hat, wobei der angepasste Bereich ein Anzeigebereich ist, in welchem die Anzeigeposition eines Bildes durch einen Benutzervorgang verändert werden kann, wobei der angepasste Bereich eine Größe in der horizontalen Richtung hat, die mit einem Mehrfachen der horizontalen Dimension des Bildschirms (101) korrespondiert, und eine Größe in der vertikalen Richtung hat, die gleich der vertikalen Dimension des Bildschirms (101) ist, wobei der angepasste Bereich in der horizontalen Richtung scrollbar ist und zu der linken oder rechten Seite des Anfangsbildschirms benachbart ist; wobei der nicht-angepasste Bereich ein Anzeigebereich ist, in welchem ein vorbestimmter Informationstyp angezeigt wird, wobei der nicht-angepasste Bereich die gleiche horizontale Dimension wie der Bildschirm (101) hat und in der vertikalen Richtung scrollbar ist und zu dem Anfangsbildschirm an einer Position benachbart angeordnet ist, die verschieden ist, von der Position des angepassten Bereichs, wobei die Anzeigevorrichtung (100) ferner eine Eingabeeinheit (130) umfasst, die dazu angepasst ist, den Benutzervorgang zu empfangen, wobei die Anzeigesteuerung (110) dazu angepasst ist, in dem angepassten Bereich ein oder mehrere Bilder, die mit einem oder mehreren Softwareprogrammen korrespondieren, an Positionen anzuzeigen, die mit dem von der Eingabeeinheit (130) empfangenen Vorgang korrespondieren, und die dazu angepasst ist, einen vorbestimmten Informationstyp an einer vorbestimmten Position in dem nicht-angepassten Bereich anzuzeigen, wobei die Anzeigesteuerung dazu angepasst ist (110), den angepassten Bereich unter Verwendung der horizontalen Größe des Bildschirms (101) als die Scrolleinheit zu verwenden, wenn ein horizontaler Scrollvorgang des Scrollens des angepassten Bereichs von dem Benutzer mittels der Eingabeeinheit (130) empfangen wird, und die dazu angepasst ist, den nicht-angepassten Bereich in einer Scrolleinheit vertikal zu scrollen, die kleiner ist, als die vertikale Größe des Bildschirms (101), wenn ein vertikaler Scrollvorgang des Scrollens des nicht-angepassten Bereichs von dem Benutzer mittels der Eingabeeinheit (130) empfangen wird.

2. Anzeigevorrichtung (100) nach Anspruch 1, wobei die Anzeigesteuerung (110) einen ersten Listenbereich, in welchem eine Liste von einem oder mehreren Softwareprogrammen angezeigt wird, auf dem Bildschirm (101) anstelle des angepassten Bereichs anzeigt, wenn ein Aufwärts- oder Abwärts-Scrollvorgang an dem angepassten Bereich von dem Benutzer mittels der Eingabeeinheit (130) empfangen wird, und die den angepassten Bereich auf dem Bildschirm (101) anstelle des ersten Listenbereichs anzeigt, wenn ein Aufwärts- oder Abwärts-Scrollvorgang an dem ersten Listenbereich von dem Benutzer mittels der Eingabeeinheit (130) empfangen wird.

3. Anzeigevorrichtung (100) nach Anspruch 2, wobei die Anzeigesteuerung (110) die Anzeige (131) ansteuert zum Anzeigen, auf dem Bildschirm (101), des Teils des angepassten Bereichs, der auf dem Bildschirm (101) angezeigt wurde, bevor eine Anzeige des Bildschirms in den ersten Listenbereich geändert wurde, wenn die Anzeige des Bildschirms von dem angepassten Bereich in den ersten Listenbereich geändert wird und dann wieder in den angepassten Bereich geändert wird.

4. Anzeigevorrichtung (100) nach Anspruch 2, wobei die Eingabeeinheit (130) von dem Benutzer einen Startvorgang zum Starten von irgendeinem von dem einen oder den mehreren Softwareprogrammen in einem Zustand empfängt, in welchem der erste Listenbereich auf dem Bildschirm (101) angezeigt wird, und
- wobei die Anzeigesteuerung (110) einen Teil anzeigt, in welchem ein Bild, das mit dem Softwareprogramm korrespondiert, das durch den Startvorgang gestartet wurde, in dem angepassten Bereich auf dem Bildschirm (101) angeordnet ist, wenn die Anzeige des Bildschirms von dem ersten Listenbereich in den angepassten Bereich nach dem Startvorgang geändert wird.

5. Anzeigevorrichtung (100) nach Anspruch 2, wobei die Anzeigesteuerung (110) auf dem Bildschirm (101) einen zweiten Listenbereich anzeigt, in welchem eine Liste von dem einem oder den mehreren Softwareprogrammen angezeigt wird, die mit einem oder mehreren in dem angepassten Bereich angezeigten Bildern korrespondieren, wobei der zweite Listenbereich angezeigt wird, wenn ein Scrollvorgang in einer Richtung, die verschieden ist von derjenigen zum Anzeigen des ersten Listenbereichs, als der Aufwärts- oder Abwärts-Scrollvorgang von dem Benutzer mittels der Eingabeeinheit (130) in einem Zustand empfangen wird, in welchem der angepasste Bereich auf dem Bildschirm (101) angezeigt wird.

6. Anzeigevorrichtung (100) nach einem der Ansprüche 2 bis 5,
- wobei das eine oder die mehreren Softwareprogramme jeweils vorbestimmte Attribute haben,
- wobei der vorbestimmte Bereich eine Größe hat, die mit mehreren Bildschirmen in der horizontalen Richtung korrespondiert, und Attribute hat, die für die Bildschirme bestimmt wurden, und
- wobei die Anzeigesteuerung (110) Bilder, die mit den Softwareprogrammen korrespondieren, in den Bildschirmen des angepassten Bereichs anzeigt, wobei die Bildschirme Attribute haben, die mit den Attributen der Softwareprogramme korrespondieren.

7. Anzeigevorrichtung (100) nach einem der Ansprüche 1 bis 6,
- wobei die Eingabeeinheit (130) von dem Benutzer einen Vergrößerungsvorgang zum Vergrößern der Größe des angepassten Bereichs empfängt, und
- wobei die Anzeigesteuerung (110) unter Verwendung der horizontalen Größe des Bildschirms (101) als die Einheit des Vergrößerns den angepassten Bereich so vergrößert, dass er in der horizontalen Richtung länger ist, als vor dem Durchführen des Vergrößerungsvorgangs, wenn der Vergrößerungsvorgang mittels der Eingabeeinheit (130) empfangen wird.

8. Verfahren zum Interagieren mit einer Benutzerschnittstelle für eine Anzeigevorrichtung (100) mit einer Anzeige (131), die einen Bildschirm (101) hat, der darauf ein Bild anzeigt, wobei der Bildschirm eine vertikale und eine horizontale Größe hat, und einer Eingabeeinheit (130), die einen Benutzervorgang empfängt, umfassend: einen ersten Schritt des Anzeigens eines Anfangsbildschirms auf den Bildschirm (101), wobei der Anfangsbildschirm die gleiche horizontale und vertikale Dimension wie der Bildschirm (101) hat; einen zweiten Schritt des Anzeigens eines oder mehrerer Bilder, die mit einem oder mehreren Softwareprogrammen korrespondieren, an Positionen, die mit dem Benutzervorgang korrespondieren, auf der Basis des mittels der Eingabeeinheit (130) empfangenen Vorgangs in einem Zustand, in welchem der Anfangsbildschirm auf dem Bildschirm (101) angezeigt wird, und des Anzeigens irgendeines von einem angepassten Bereich, der ein Anzeigebereich ist, in welchem die Anzeigeposition eines Bildes durch den Benutzervorgang verändert werden kann, und einem nicht-angepassten Bereich, der ein Anzeigebereich ist, in welchem ein vorbestimmter Informationstyp angezeigt wird, wobei der angepasste Bereich eine Größe in der horizontalen Richtung hat, die mit einem Mehrfachen der horizontalen Dimension des Bildschirms (101) korrespondiert, und eine Größe in der vertikalen Richtung hat, die gleich der vertikalen Dimension des Bildschirms (101) ist, wobei der angepasste Bereich in der horizontalen Richtung scrollbar ist und zu der linken oder rechten Seite des Anfangsbildschirms benachbart angeordnet ist; und wobei der nicht-angepasste Bereich die gleiche horizontale Dimension wie der Bildschirm (101) hat und in der vertikalen Richtung scrollbar ist und zu dem Anfangsbildschirm an einer Position benachbart angeordnet ist, die verschieden ist, von der Position des angepassten Bereichs, wobei das Verfahren ferner umfasst: einen dritten Schritt des horizontalen Scrollens des angepassten Bereichs unter Verwendung der horizontalen Größe des Bildschirms (101) als die Scrolleinheit, wenn ein Scrollvorgang des Scrollens des angepassten Bereichs von dem Benutzer mittels der Eingabeeinheit (130) empfangen wird, und des vertikalen Scrollens des nicht-angepassten Bereichs in der Scrolleinheit, die kleiner ist, als die vertikale Größe des Bildschirms (101), wenn ein vertikaler Scrollvorgang des Scrollens des nicht-angepassten Bereichs von dem Benutzer mittels der Eingabeeinheit (130) empfangen wird.

9. Computerprogrammprodukt, das Anweisungen umfasst, die dazu angepasst sind, jeden der Schritte aus dem Verfahrensanspruch 8 auszuführen.

## Revendications

1. Dispositif d'affichage (100) comprenant : un affichage qui a un écran (101) affichant une image sur celui-ci, l'écran ayant une taille verticale et une horizontale ; un contrôleur d'affichage (110) qui est adapté pour contrôler l'affichage (131) pour afficher sur l'écran (101) l'un quelconque d'une pluralité d'écrans incluant un écran initial, un espace personnalisé et un espace non personnalisé, dans lequel l'écran initial a la même dimension horizontale et verticale que l'écran (101), l'espace personnalisé est un espace d'affichage dans lequel la position d'affichage d'une image peut être changée par une opération d'un utilisateur, l'espace personnalisé ayant une taille dans la direction horizontale correspondant à un multiple de la dimension horizontale de l'écran (101) et une taille dans la direction verticale égale à la dimension verticale de l'écran (101), l'espace personnalisé étant déroulant dans la direction horizontale et étant adjacent au côté gauche ou droit de l'écran initial ; dans lequel l'espace non personnalisé est un espace d'affichage dans lequel un type prédéterminé d'information est affiché, l'espace non personnalisé ayant la même dimension horizontale que l'écran (101) et est déroulant dans la direction verticale et est positionné de manière adjacente à l'écran initial à une position autre que la position de l'espace personnalisé, le dispositif d'affichage (100) comprend en outre une unité d'entrée (130) qui est adaptée pour recevoir l'opération de l'utilisateur, dans lequel le contrôleur d'affichage (110) est adapté pour afficher dans l'espace personnalisé une ou plusieurs images correspondant à un ou plusieurs programmes logiciels à des positions correspondant à ladite opération reçue par l'unité d'entrée (130) et est adapté pour afficher un type prédéterminé d'information à une position prédéterminée dans l'espace non personnalisé, le contrôleur d'affichage étant adapté pour (110) dérouler horizontalement l'espace personnalisé en utilisant la taille horizontale de l'écran (101) comme l'unité de déroulement lorsqu'une opération de déroulement horizontal de déroulement de l'espace personnalisé est reçue de l'utilisateur par l'unité d'entrée (130) et est adapté pour dérouler verticalement l'espace non personnalisé dans une unité de déroulement plus petite que la taille verticale de l'écran (101) lorsqu'une opération de déroulement vertical de déroulement de l'espace non personnalisé est reçue de l'utilisateur par l'unité d'entrée (130).

2. Dispositif d'affichage (100) selon la revendication 1, dans lequel le contrôleur d'affichage (110) affiche un premier espace de liste, dans lequel une liste d'un ou plusieurs programmes logiciels exécutables est affichée, sur l'écran (101) au lieu de l'espace personnalisé lorsqu'une opération de déroulement vers le haut ou vers le bas sur l'espace personnalisé est reçue de l'utilisateur par l'unité d'entrée (130), et affiche l'espace personnalisé sur l'écran (101) au lieu du premier espace de liste lorsqu'une opération de déroulement vers le haut ou vers le bas sur le premier espace de liste est reçue de l'utilisateur par l'unité d'entrée (130).

3. Dispositif d'affichage (100) selon la revendication 2, dans lequel le contrôleur d'affichage (110) commande à l'affichage (131) d'afficher sur l'écran (101) la partie de l'espace personnalisé qui a été affichée sur l'écran (101) avant qu'un affichage de l'écran ait été changé en premier espace de liste, lorsque l'affichage de l'écran est changé de l'espace personnalisé en premier espace de liste et est ensuite changé à nouveau en l'espace personnalisé.

4. Dispositif d'affichage (100) selon la revendication 2, dans lequel l'unité d'entrée (130) reçoit de l'utilisateur une opération de démarrage consistant à démarrer l'un quelconque des un ou plusieurs programmes logiciels dans un état où le premier espace de liste est affiché sur l'écran (101), et
dans lequel le contrôleur d'affichage (110) affiche une partie dans laquelle une image correspondant au programme logiciel démarré par l'opération de démarrage est disposée dans l'espace personnalisé sur l'écran (101) lorsque l'affichage de l'écran est changé du premier espace de liste en l'espace personnalisé après l'opération de démarrage.

5. Dispositif d'affichage (100) selon la revendication 2, dans lequel le contrôleur d'affichage (110) affiche sur l'écran (101) un deuxième espace de liste, dans lequel une liste des un ou plusieurs programmes logiciels correspondant à une ou plusieurs images affichées dans l'espace personnalisé est affichée,
le deuxième espace de liste étant affiché lorsqu'une opération de déroulement dans une direction autre que celle pour afficher le premier espace de liste est reçue comme l'opération de déroulement vers le haut ou vers le bas de l'utilisateur par l'unité d'entrée (130) dans un état où l'espace personnalisé est affiché sur l'écran (101).

6. Dispositif d'affichage (100) selon l'une quelconque des revendications 2 à 5, dans lequel les un ou plusieurs programmes logiciels ont respectivement des attributs prédéterminés,
dans lequel l'espace personnalisé à une taille correspondant à une pluralité d'écrans dans la direction horizontale et a des attributs déterminés pour les écrans, et
dans lequel le contrôleur d'affichage (110) affiche des images correspondant aux programmes logiciels dans les écrans de l'espace personnalisé, les écrans ayant des attributs correspondant aux attributs des programmes logiciels.

7. Dispositif d'affichage (100) selon l'une quelconque des revendications 1 à 6, dans lequel l'unité d'entrée (130) reçoit de l'utilisateur une opération d'agrandissement pour agrandir la taille de l'espace personnalisé, et
dans lequel le contrôleur d'affichage (110) agrandit, en utilisant la taille horizontale de l'écran (101) comme l'unité d'agrandissement, l'espace personnalisé pour qu'il soit plus long dans la direction horizontale que celui avant d'effectuer l'opération d'agrandissement lorsque l'opération d'agrandissement est reçue par l'unité d'entrée (130).

8. Procédé pour interagir avec une interface utilisateur pour un dispositif d'affichage (100) ayant un affichage (131) qui a un écran (101) affichant une image sur celui-ci, l'écran ayant une taille verticale et une horizontale, et une unité d'entrée (130) qui reçoit une opération d'un utilisateur, comprenant :
une première étape d'affichage d'un écran initial sur l'écran (101), dans lequel l'écran initial a la même dimension horizontale et verticale que l'écran (101) ;
une deuxième étape d'affichage d'une ou plusieurs images correspondant à un ou plusieurs programmes logiciels à des positions correspondant à l'opération de l'utilisateur sur la base de l'opération reçue par l'unité d'entrée (130) dans un état où l'écran initial est affiché sur l'écran (101), et afficher l'un quelconque d'un espace personnalisé, qui est un espace d'affichage dans lequel la position d'affichage d'une image peut être changée par l'opération de l'utilisateur, et d'un espace non personnalisé, qui est un espace d'affichage dans lequel un type prédéterminé d'information est affiché, dans lequel l'espace personnalisé a une taille dans la direction horizontale correspondant à un multiple de la dimension horizontale de l'écran (101) et une taille dans la direction verticale égale à la dimension verticale de l'écran (101), l'espace personnalisé étant déroulant dans la direction horizontale et est positionné de manière adjacente au côté gauche ou droit de l'écran initial ; et dans lequel l'espace non personnalisé a la même dimension horizontale que l'écran (101) et est déroulant dans la direction verticale et est positionné de manière adjacente à l'écran initial à une position autre que la position de l'espace personnalisé, le procédé comprenant en outre : une troisième étape de déroulement horizontal de l'espace personnalisé en utilisant la taille horizontale de l'écran (101) comme l'unité de déroulement lorsqu'une opération de déroulement consistant à dérouler l'espace personnalisé est reçue de l'utilisateur par l'unité d'entrée (130), et de déroulement vertical de l'espace non personnalisé dans l'unité de déroulement plus petite que la taille verticale de l'écran (101) lorsqu'une opération de déroulement vertical consistant à dérouler l'espace non personnalisé est reçue de l'utilisateur par l'unité d'entrée (130).

9. Produit programme d'ordinateur comprenant des instructions adaptées pour exécuter chacune des étapes du procédé de la revendication 8.
